# EUROPEAN PATENT APPLICATION

(11) **EP 3 819 118 A1**
(43) Date of publication of application: **12.05.2021**
(21) Application number: 19207686.7
(22) Date of filing: 07.11.2019
(51) Int. Cl.: B32B 5/22, B32B 7/10, B32B 5/26, B32B 29/00, B32B 29/02, D06M 11/54

(54) **COMPOSTABLE LID FOR SEALING A BEVERAGE CAPSULE OR A BEVERAGE PAD AND CAPSULES AND PADS SEALED THEREWITH**

(71) Applicant: Ahlstrom-Munksjö Oyj, 00100 Helsinki (FI)
(72) Inventor: PLANCHARD, Hervé, 56950 Crach (FR)
(74) Representative: Hoffmann Eitle

(57) **Abstract**

This invention relates a compostable lid for sealing a beverage capsule or a beverage pad wherein the lid comprises a natural-fiber based support obtainable by:
(i) providing a first fibrous base sheet comprising natural fiber material sensitive to a gelatinizing agent;
(ii) treating the first base sheet with a gelatinizing agent to give a treated first fibrous base sheet comprising gelatinized material;
(iii) providing a second fibrous base sheet;
(iv) contacting the treated first fibrous base sheet and the second base sheet with each other;
(v) causing at least partial migration of the gelatinized material from the treated first fibrous base sheet into the second fibrous base sheet to give a multilayer product; and
(vi) neutralizing and/or washing the product thus obtained and then drying it.

## Description

### Technical field

The present invention relates to a compostable lid for sealing a beverage capsule or a beverage pad. Further aspects of the present invention include beverage capsules comprising the compostable lid and beverage pads described herein, a method of forming a natural fiber based support, as well as packaging material containing the support obtained thereby.

### Background art

Beverage capsules and beverage pads are known, and every morning, millions of coffee drinkers produce enormous amounts of waste all over the globe. As pods are generally not accepted by local recycling collections, most beverage capsules and beverage pads end up in landfill. Many countries have started environmental initiatives to reduce waste, but there remains a significant customer demand for single-served beverage pods.

WO 2017/187024 addresses this issue as it describes a compostable lid for beverage capsules. The approach suggested in the prior art, however, is still not satisfactory for a couple of reasons. On the one hand, the prior art proposes a multi-layer material comprising at least two layers that are attached to each other by an adhesive layer. The manufacture of the prior art material, therefore, involves multiple process steps. These steps consume energy, and they create waste. Moreover, adhesive layers are very often sensitive to heat and moisture which presents a problem when the lid is exposed to hot water during brewing and coffee extraction. Under contact with hot water, coffee lids according to the prior art may thus delaminate and split into individual layers. Once delamination occurs, the adhesive may partially dissolve and thereby generate undesired organoleptic changes to the beverage. There is thus still room for improving the mechanical properties of the materials described so far and for avoiding the organoleptic problems that are associated with adhesives. On the other hand, recycling multi-layer structures may be difficult when the different layers are prepared from different materials.

It is thus an object of the present invention to provide an improved lid for sealing a beverage capsule or a beverage pad as well as coffee capsules or pads comprising the lid described herein.

For the purposes of the present invention, the term "lid" as used herein is intended to have its classical meaning as far as capsules are concerned. "Lid" as defined herein is further used to describe a beverage pad. Specifically, a beverage pad can be formed from a typical filter sheet material and a lid as defined herein, the filter sheet material and the lid enclosing, e.g. coffee powder. Alternatively, a beverage pad can be formed also from two lids of the invention. The expression "compostable lid for sealing a beverage pad", therefore, relates to the preparation of a beverage package having typical pad dimensions and can be used synonymously with the expression "compostable lid for preparing a beverage pad".

While it was discovered that the compostable lid that is described herein provides a solution to the problem associated with prior art beverage pads and capsules, the inventors further discovered that a packaging material, such as a food wrapping material, that comprises the compostable natural-fiber based support which is obtainable according to the method described herein has significant additional value when compared with prior art food packaging material.

### Summary of the invention

In a first aspect, the present invention therefore relates to a compostable lid for sealing a beverage capsule or a beverage pad wherein the lid comprises a natural-fiber based support obtainable by:
(i) providing a first fibrous base sheet comprising natural fiber material sensitive to a gelatinizing agent;
(ii) treating the first base sheet with a gelatinizing agent to give a treated first fibrous base sheet comprising gelatinized material;
(iii) providing a second fibrous base sheet;
(iv) contacting the treated first fibrous base sheet and the second base sheet with each other;
(v) causing at least partial migration of the gelatinized material from the treated first fibrous base sheet into the second fibrous base sheet to give a multilayer product; and
(vi) neutralizing and/or washing the product thus obtained and then drying it.

It has been found that a compostable lid comprising a natural-fiber based support that is obtainable by steps (i) through (vi) is associated with superior properties as compared to products that are disclosed in the prior art. Moreover, a further advantage resides in the fact that preparing the natural-fiber based support as described herein helps to save energy and minimize waste as compared to prior art procedures.

In a second aspect the present invention thus relates to a process for the preparation of a compostable lid as described herein wherein the lid comprises a natural-fiber based support. This process comprises the process steps discussed herein.

In a third aspect, the invention addresses beverage capsules and beverage pads comprising the compostable lid described herein.

A fourth, a fifth and a sixth aspect of the invention relate to a method for the preparation of a compostable, natural-fiber based support, the method comprising the steps disclosed herein; to a compostable natural-fiber based support obtainable thereby; as well as to a packaging material comprising said compostable natural-fiber based support, respectively.

### Detailed description of the invention

The present invention relates, in a first aspect, to a compostable lid for sealing a beverage capsule or a beverage pad wherein the lid comprises a natural-fiber based support obtainable by:
(i) providing a first fibrous base sheet comprising natural fiber material sensitive to a gelatinizing agent;
(ii) treating the first base sheet with a gelatinizing agent to give a treated first fibrous base sheet comprising gelatinized material;
(iii) providing a second fibrous base sheet;
(iv) contacting the treated first fibrous base sheet and the second base sheet with each other;
(v) causing at least partial migration of the gelatinized material from the treated first fibrous base sheet into the second fibrous base sheet to give a multilayer product; and
(vi) neutralizing and/or washing the product thus obtained and then drying it.

In the context of the present invention, following definitions and test methods apply.

Compostability is generally defined in line with the EN13432 standard. The term "compostable lid" designates a lid comprising a maximum of 20, preferably 10, most preferably 5 % by weight of constituents without determined biodegradability, thereby meeting EN13432. The expression "compostable" when applied to a material or a product means that the material, or the entire product, will both biodegrade and disintegrate. By "biodegrade" it is meant that the chemical structure or the material breaks down under the action of micro-organisms, while by "disintegrates" it is meant that the material, or the product made from it, will physically fall apart into fine visually indistinguishable fragments, at the end of a typical composting cycle. In order to be considered a compostable polymer material, the polymer chains must break down under the action of the micro-organisms, so that total mineralization is achieved (i.e. conversion of the material into CO2, water, inorganic compounds and bio mass under aerobic conditions) at a high rate compatible with the normal composting process of vegetable waste.

The expression "natural-fiber based support" designates a support comprising natural fibers that are refined more or less according to desired properties (density, transparency, mechanical properties). Likewise, the term "natural fiber material" defines a material that is based on fibers with natural origin. According to the present invention, the expression "natural fiber material sensitive to a gelatinizing agent" defines a material that generates gelatinized material when treated with a gelatinizing agent. For example, the natural fiber material may comprise cellulose and the gelatinizing agent may comprise sulfuric acid; the fibers may comprise Chitosan and the gelatinizing agent may comprise acetic acid; the fibers may comprise nylon and the gelatinizing agent may comprise formic acid; the fibers may comprise polylactic acid (PLA) and the gelatinizing agent may comprise a PLA solvent.

According to the present invention, at least a first and a second, i.e. at least two fibrous base sheets are involved in the preparation of the compostable, natural-fiber based support. The present specification, therefore, identifies first and second base sheets without intending to limit the invention to merely two such sheets. Where appropriate, the present specification, therefore, identifies the first and the second sheets as "at least" the first/the second sheet, and the specification also speaks about "further" sheets to clarify that additional fibrous base sheets may be employed in the process steps described herein.

The at least first and second fibrous base sheets may contain a combination of fiber materials. Alternatively, at least one sheet can be a sheet that contains different fiber materials.

The first fibrous base sheet is preferably a cellulose fiber-based sheet. The cellulose fiber-based sheet is preferably comprised of at least 70% cellulose fibers, ideally at least 80%, at least 90%, or more preferably 100% cellulose fibers. This base sheet preferably has a basis weight of 35-140 gsm, preferably 60-120 gsm and a thickness of 50-200 µm. The cellulose based sheet is advantageously a wetlaid paper comprised of 100% biodegradable cellulosic fibers.

Although not limited thereto, it is preferable that the cellulose fiber base sheet has a sufficient porosity to allow easier penetration of the gelatinizing agent used in the parchmentizing process into the fibrous structure of the cellulose fiber base sheet. The porosity of the sheet can be measured using a Bendtsen porosity tester, which calculates porosity by forcing air through the sheet and measuring the rate of flow, according to ISO 5636-3 standard. The cellulose fiber base sheet preferably has a Bendsten porosity in the range of from 1000 ml/min to 3000 ml/min, more preferably from 1500 ml/min to 2500 ml/min and most preferably from 1800 ml/min to 2200 ml/min.

When the Bendsten porosity of the cellulose fiber base sheet is lower than 1000 ml/min, the gelatinizing agent may not reach the core of the fibrous structure of the cellulose fiber base sheet and the continuous cellulosic fiber matrix may not be sufficiently formed and the gas barrier properties of the compostable cellulose-based paper may be decreased. On the other hand, when the Bendsten porosity of the cellulose fiber base sheet is higher than 3000 ml/min, the cellulose fiber base sheet may not have enough mechanical strength to run through the parchmentizing process as the cellulose fiber base sheet may be more easily ruptured.

In one embodiment of the invention, the second and/or further base sheet(s) may be a (i.e. one) or more fibrous base sheet(s) that essentially correspond(s) to the first base sheet. In another embodiment, the second fibrous base sheet (and, optionally, further fibrous base sheets) may be (a) non-woven base sheet (s) that is (are) different from the first fibrous base sheet.

A non-woven base sheet as used in the present invention defines a material having a structure of individual fibers which are interlaid, but not in an identifiable manner as in a woven or knitted fabric. Non-woven materials have been formed from many processes such as, for example, meltblowing, spin laying, carding, air laying and water laying processes. The basis weight of non-woven materials is usually expressed in weight per unit area, for example in grams per square meter (gsm/g/m²) or ounces per square foot (osf). As used herein, a non-woven sheet includes a wetlaid paper sheet.

The second fibrous base sheet may be a non-woven base sheet containing thermo-sealable fibers and of from 30 to 80 % by weight parchmentizable fibers. Preferably, the second fibrous base sheet is a non-woven base sheet that is comprised completely of biodegradable fibers. Incorporating thermo-sealable fibers into the second fibrous base sheet will confer thermo-sealable properties to the composite structure that is obtained upon parchmentizing together the first and second base sheets.

In a preferred embodiment of the invention, at least one of the fibrous base sheets, ideally at least the first and the second, most preferably all of the fibrous base sheets that are involved in the preparation of the compostable lid or packaging material described herein, are wetlaid sheets.

The term fiber as used herein refers to a material form characterized by an extremely high ratio of length to diameter. The terms fiber and filament can be used interchangeably for the purposes of the present invention unless otherwise specifically indicated. A cellulose fiber is a fiber comprised substantially of cellulose. Cellulose fibers can come from manmade sources (for example, regenerated cellulose fibers or lyocell fibers) or natural sources such as cellulose fibers or cellulose pulp from woody and non-woody plants. Woody plants include, for example, deciduous and coniferous trees. Non-woody plants include, for example, cotton, flax, esparto grass, kenaf, sisal, abaca, milkweed, straw, jute, hemp, and bagasse. A cellulose material is a material comprised substantially of cellulose. The material may be a fiber or a film. Cellulose materials come from manmade sources (for example, regenerated cellulose films and fibers) or natural sources such as fibers or pulp from woody and non-woody plants. Regenerated cellulose defines manmade cellulose obtained by chemical treatment of natural cellulose to form a soluble chemical derivative or intermediate compound and subsequent decomposition of the derivative to regenerate the cellulose. Regenerated cellulose includes spun rayon and cellophane film. Regenerated cellulose processes include the viscose process, the cuprammonium process and saponification of cellulose acetate.

As described before, the first aspect of the present invention relates to a compostable lid for sealing a beverage capsule or a beverage pad wherein the lid comprises a natural-fiber based support obtainable by steps (i) to (vi). This aspect of the invention thus encompasses the use of the compostable lid and/or the natural fiber-based support as described herein in a coffee capsule or a coffee pad.

The natural-fiber based support that is obtainable by steps (i) through (vi) of the invention, therefore, can be prepared by providing a first fibrous base sheet comprising natural fiber material that is sensitive to a gelatinizing agent. This sheet is then treated with a gelatinizing agent to give a treated first fibrous base sheet comprising gelatinized material (step ii). This treated first fibrous base sheet is then contacted/brought together with a second fibrous base sheet (step iv) provided in step (iii) to allow migration of the gelatinized material from the treated first fibrous base sheet into the second fibrous base sheet (step (v)), thereby giving a multilayer product. If further fibrous base sheets are involved in the preparation of the compostable natural-fiber based support described herein, such a further fibrous base sheet can be contacted/brought together with the other (i.e. with the at least first and second) fibrous base sheets either in step (iv) or in a later step. The multilayer product that is obtained in step (v) can also be considered a precursor material of the natural-fiber based support. The precursor material is then washed and neutralized and dried to yield the natural-fiber based support.

One important aspect of the present invention resides in the discovery that treating the first fibrous base sheet with a gelatinizing agent not only results in the formation of a gel but that this gel can also be used to combine the first fibrous base sheet with a second layer, i.e. with at least the second fibrous base sheet or even additional fibrous base sheets.

A further key aspect of the present invention is the discovery that the compostable lids that contain the natural-fiber based support described herein are particularly suitable for coffee capsules or coffee pads as well as for packaging material for food.

Specifically, it was discovered that the compostable lid of the invention not only meets the mechanical expectations and thus helps to avoid the problems of adhesive layers. But it was also found that the compostable lid material described herein has nearly perfect transmission rates of oxygen and water vapor.

By first providing such a gel material in at least the treated first fibrous base sheet and then, subsequently, contacting this treated base sheet with a second layer (i.e. the second fibrous base sheet) and allowing the gelatinized material to migrate from the first fibrous base sheet into the second fibrous base sheet, it is thus possible to create a multilayer product with unique properties that are particularly advantageous for the preparation of a compostable lid of a beverage capsule or pad or a packaging material for food. If further (i.e. a third, fourth, ...) layers (fibrous base sheets) are involved, migration of gelatinized material into neighbouring layers can be achieved through the additional interfaces that exist betwee neighbouring layers in an analogous manner.

Without wishing to be bound by any particular theory, the inventors believe that migration of the gel material from at least the first into the second fibrous base sheet prior to, i.e. before the washing, neutralizing and the drying step allows to provide an intimate contact such that the first and the second fibrous base sheets are effectively connected with each other. The multilayer product that is obtained in step (v), therefore, can also be considered a composite layer. In a preferred embodiment of the invention, this composite layer has a relatively high concentration of gelatinized material in the contact area of the first and the second fibrous base sheets. Preferably, the amount of the gelatinized material that is present in the contact area of the first and second fibrous base sheets (or in the contact area of further fibrous base sheets that are in contact with, e.g. the second fibrous base sheet) is of from 15 to 50 by weight, such as, e.g. 20 to 40 % by weight, based on the total weight of the material that is present in that particular contact area.

In a further preferred embodiment of the first aspect of the present invention, the natural fiber material comprises at least one of cellulose and chitosan. Ideally, the gelatinizing agent comprises an acid, preferably, one or more of sulfuric acid, acetic acid and formic acid.

In yet another embodiment, the natural fiber material preferably comprises cellulose fibers that are selected from wood pulp fibers, non-wood vegetable fibers and regenerated cellulose fibers.

Depending on the specific type of natural fiber material sensitive to a gelatinizing agent, the multilayer product that is obtained in step (v) is subjected to a neutralizing and/or washing step prior to drying the product. Step (vi), therefore, may include both, a washing and a neutralizing step prior to drying the product thus obtained.

In a particularly preferred embodiment, the second fibrous base sheet that is provided in step (iii) comprises natural fiber material.

In yet another preferred embodiment, the second fibrous base sheet that is provided in step (iii) is a treated second fibrous base sheet that comprises gelatinized material. Particularly preferably, the first and the second and possible further fibrous base sheets are treated simultaneously in step (ii) .

When both the first and the second / further fibrous base sheets are treated with a gelatinizing agent to give treated first and second / further fibrous base sheets, it is possible to allow migration of the gelatinized material not only from the first into the second treated fibrous base sheet but also from the second to the first fibrous base sheet. Likewise, if further base sheets are involved, migration can take place also through the further contact areas that may exist between, e.g. the second and third fibrous base sheet. Without wishing to be bound by theory, it is believed that this additional migration of gel material allows a particularly secure combination of the fibrous base sheets. Expressed differently, the mechanical strength of the contact area of the first and the second fibrous base sheets is significantly improved when compared with prior art solutions that involve adhesive layers.

Ideally, treating the individual base sheets with a gelatinizing agent is performed by passing a base sheet, e.g. the first base sheet through a gelatinizing agent.

In the natural-fiber based support of the present invention, the at least first and second fibrous base sheets that are provided in steps (i) and (iii) thus present themselves in the form of a reinforced composite sheet wherein natural fibers / natural fiber material that is sensitive to a gelatinizing agent results in the formation of a gel (herein also identified as "gelatinized material") that migrates from the treated fibrous base sheet into the neighbouring fibrous base sheet. Upon drying and/or neutralizing/washing the product thus obtained, the gel that is migrated from one sheet to the other then precipitates such that the at least first and second layers are bonded together with the aid of the precipitated material.

According to the second aspect of the invention, disclosed is a method of forming a natural fiber based support comprising the steps of (i) providing a first fibrous base sheet comprising natural fiber material sensitive to a gelatinizing agent; (ii) treating the first base sheet with a gelatinizing agent to give a treated first fibrous base sheet comprising gelatinized material; and (iii) providing a second fibrous base sheet that can either be treated or non-treated.

In case the second fibrous base sheet comprises natural fiber material, it is particularly preferable that the second fibrous base sheet that is provided in step (iii) is a treated second fibrous base sheet that comprises gelatinized material. Ideally, the second non-wove base sheet is thus also a material that is sensitive to a gelatinizing agent. When both, the first and the second fibrous base sheets comprise natural fiber material sensitive to a gelatinizing agent, it may be practical to immerse at least one of the at least first and second fibrous base sheets or all of the at least first and second fibrous base sheets in a gelatinizing agent to at least partially gelatinize the natural fiber material that is sensitive to a gelatinizing agent to thereby yield the treated fibrous base sheet comprising the gelatinized material. In a very practical approach, the treated fibrous base sheets can then be laid over each other, for example, the treated first fibrous base sheet can be overlaid onto the second fibrous base sheet, to form a composite treated material wherein the gelatinized material of one (e.g. the first) layer is caused to migrate at least partially into its neighbouring (e.g. the second) fibrous-base sheet layer. Subsequently, the gelatinized material can be precipitated, e.g. by subjecting the composite treated material to a neutralizing and/or washing step prior to drying the product thus obtained to form the composite, reinforced material that forms the natural-fiber based support of the present invention.

The at least first and second fibrous base sheets may be comprised of one or more types of fibrous material including at least one fibrous material having a suitable sensitivity to a gelatinizing agent. For example, the sensitive fibers may comprise cellulose and the gelatinizing agent may comprise sulfuric acid; the sensitive fibers may comprise Chitosan and the gelatinizing agent may comprise acetic acid; the sensitive fibers may comprise nylon and the gelatinizing agent may comprise formic acid; the sensitive fibers may comprise polylactic acid (PLA) and the gelatinizing agent may comprise a PLA solvent. The base sheet may also be comprised of a combination of fiber materials.

In one variation of the invention the natural fiber-based support can be considered as a reinforced parchmented paper. While parchmented paper is typically prepared by first treating a fibrous base sheet comprising non-cellulose fibers and cellulose fibers with a gelatinizing agent; then rearranging partially dissolved cellulose fibers in the treated base sheet into the sheet and over the surface of the sheet; and finally precipitating the dissolved cellulose fibers to form the parchment paper, the present inventors observed that the combination of first and second fibrous base sheets as disclosed herein allows the preparation of particularly useful support materials that can be used as a compostable lid for sealing beverage capsules or preparing pads.

In a preferred embodiment, the compostable lid of the present invention thus involves a modified parchmenting (hereinafter also referred to as modified parchmentising) process wherein the natural fiber-based support is made by treating a cellulose paper sheet with a gelatinizing agent comprising, for example, sulfuric acid under conditions where the reaction time between the gelatinizing agent and the cellulose is limited to control cellulose dissolution, hydrolysis and degradation.

After contacting the treated paper with a second (further) fibrous base sheet and allowing the gelatinized material to migrate from the treated first fibrous base sheet into the second fibrous base sheet (or from the second to a neighbouring "further" fibrous base sheet), the multilayer product thus obtained can then be subjected to a calendering process. Although such a process usually results in a smoothing of the surface of a fibrous material by pressing it between opposing surfaces, such a calendering step also assists the gelatinized material to migrate from a first fibrous base sheet into a second fibrous base sheet. The opposing surfaces include flat platens, rollers, rollers having projections and combinations thereof. Either or both of the opposing surfaces may be heated.

While such a calendaring process is known in the art, it is a suitable measure to cause at least partial migration of the gelatinized material from the treated first fibrous base sheet into the second fibrous base sheet as described in step (iv) of the present invention.

Once migration of the gelatinized material has taken place, the multilayer product can be neutralized or washed or both to remove an excess of gelatinizing agent. In a typical process, the gelatinizing agent is provided in the form of a bath to chemically dissolve parts of the natural fiber material, e.g. to gelatinize cellulose. As dissolved cellulose precipitates when the bath chemical is diluted by washing the treated paper, the compostable lid of the present invention can be obtained in a modified parchmenting or parchmentizing process. An important aspect of the present invention is that the treated first fibrous base sheet is brought into contact with a second fibrous base sheet to allow migration of the gelatinized material from one sheet to the other as described herein before precipitation of the gelatinized material proceeds to completion.

As far as non-cellulose fibers may be present in the compostable natural-fiber based support that is described herein, these fibers can be derived from a wide range of materials, for example glass, carbon, polyethylene terephthalate (PET), a mixture of polyethylene terephthalate polymers with similar or modified chemistries (for example CHDM (1,4-cyclohexanedimethanol) modified polyethylene terephthalate), polylactic acid (PLA), other polyesters such as polybutylene terephthalate (PBT) and poly trimethylene terephthalate (PTT), polypropylene (PP), polyethylene (PE), polyamide, copolymers of any of these polymers, mixtures of any of these polymers, Chitosan. The non-cellulose fibers are advantageously comprised of a thermoplastic polymer material and especially advantageously comprised of polypropylene or polyethylene terephthalate. The non-cellulose fibers may optionally contain one or more independently selected processing additives, including, for example, colouring pigments, opacifying pigments, functional additives such as a hydrophilic agents, antistatic agents and mixtures thereof. The non-cellulose fibers have a fiber diameter of from about 5 to about 50 µm, preferably from about 10 to about 30 µm. The shape of these fibers is typically round although they can be any shape that is convenient to produce for the intended end use, e.g., round, trilobal, triangular, dog-boned, flat or hollow. Cut fibers will have a length of less than 100 mm, advantageously less than 50 mm and typically in the range of about 4 mm to about 25 mm depending on use. As far as non-cellulose fibers are present in the compostable natural-fiber based support described herein, the amount of any component without determined biodegradability is limited to 20% by weight, preferably 10% by weight, and most preferably 5% by weight in the sense of EN13432.

In one variation of the present invention, staple length thermoplastic fibers and cellulose fibers can be mixed and a fibrous base sheet is formed from this mixture, such as by the known wet papermaking process of depositing a dilute dispersion of fibers over a screen or wire. Fibers comprising other materials, for example rayon, may also be used in addition to the thermoplastic fibers and the cellulose fibers. Advantageously at least 40 percent of the fibers in the resultant base sheet are cellulose fibers.

In a preferred embodiment of the invention, at least 40 percent, preferably at least 50 percent, particularly preferably at least 60 percent, even more preferably at least 80 percent of the fibers in the first fibrous based base sheet are cellulose fibers.

Typically the base sheet will not include binders and other additives. However, additives may be used to achieve specific desired results. For example, a thermosetting resin such as KYMENE available from Hercules Incorporated of Wilmington, Delaware, USA can be added to modify reactivity of the fibers in the base sheet to subsequent process operations, for example gelatinizing, or a wet strength agent might be advantageous to provide the wet base sheet with strength to endure subsequent operations without breaking or a filler such as Ti02 may be added to modify opacity of the base sheet.

The basis weights (grammages; units g/m² = gsm) of the resultant base sheet may be selected according to the fiber and/or filament constitution and the intended end use. In some advantageous embodiments the dried base sheet will have a basis weight of from about 20 gsm to about 180 gsm, more advantageously from about 30 gsm to about 100 gsm and preferably from about 35 gsm to about 70 gsm.

The base sheet can be treated with a gelatinizing agent by passing it through a bath containing the gelatinizing agent, under predefined conditions of time and temperature. Suitable conditions for treating the base sheet with a gelatinizing agent are readily determined by a person skilled in the art.

Under normal conditions the gelatinizing agent is a mineral acid, advantageously sulfuric acid, in aqueous solution at a concentration of about 55 percent to 85 percent by weight and advantageously at a concentration of about 55 percent to about 75 percent by weight. The treatment duration is typically from about 5 seconds to about 30 seconds and advantageously about 10 seconds to 25 about 20 seconds. Sulfuric acid used as a gelatinizing agent is typically at a temperature of about -10 °C to about 25 °C and advantageously about -5 °C to about 15 °C. The gelatinizing agent serves to partially dissolve or gelatinize portions of the cellulose fibers contacting the agent. Typically, no more than about 30 percent of the cellulose in the treated base sheet is dissolved by the gelatinizing agent.

As the treated base sheet is conveyed into, through and out of the bath it passes over and under material handling rolls. Passage of the treated base sheet over the rolls helps to smear or spread the gelatinized cellulose over the sheet surface and between the other fibers of the sheet.

According to a key aspect of the invention, the treated first fibrous base sheet comprising gelatinized material is brought into contact with a second fibrous base sheet in step (iv) . Contacting the at least two base sheets as required by step (iv) can be carried out, for example, between calendar rolls. Such calendar rolls have the additional advantage that they will cause at least partial migration of the gelatinized material from the treated first fibrous base sheet into the second fibrous base sheet to give the multilayer product of step (v). The gelatinized material can then precipitate when the gelatinizing agent is diluted during washing or, alternatively, in the drying step.

The natural fiber based support that is obtained according to the present invention will typically have a layered structure that results from the at least first and second fibrous base sheets and precipitated gelatinized material, e.g. precipitated cellulose, in the contact area of the two (i.e. in the area of contact of the first and the second) fibrous base sheets.

The interior of the first and the second fibrous base sheets as well as their outer regions that are essentially facing away from the contact area may retain most of the original fibrous structure, but fibers from the first and the second fibrous base sheets located closer to the contact area will be partially or fully covered by, e.g. amorphous, precipitated cellulose. That is to say, the gelatinized material (e.g. precipitated cellulose) will partially surround and bond at least some of the fibers of the first and the second fibrous base sheets in the area of contact of the first and the second base sheet, wherein this contact area is created in step (iv).

In a third aspect of the invention, the compostable lid described above is used to seal a coffee capsule or to prepare a coffee pad. The present invention, therefore, is directed also towards coffee capsules and coffee pads comprising the lid described herein. Fourth, fifth and sixth aspects of the invention relate to a method for the preparation of a compostable, natural-fiber based support, the method comprising the steps disclosed herein; to a compostable natural-fiber based support obtainable thereby; as well as to a packaging material comprising said compostable natural-fiber based support.

It has been found that one particular advantage of the compostable lid and the compostable natural fiber-based support as well as the food packaging material described herein resides in the beneficial mechanical properties, as well as in the barrier properties towards oxygen and moisture. Ideally, the compostable lid described herein has an oxygen transmission rate of less than 10 cm³/m²/day, preferably less than 2 cm³/m²/day, when determined at an atmospheric pressure of 1.013 bar, at 23°C and 50 % relative humidity according to ASTM D 3895 and ASTM F 1927.

In a further preferred embodiment, the compostable lid, the compostable natural fiber-based support and/or the food packaging material according to the invention has a water vapor transmission rate of less than 10 g/m²/day, preferably less than 5 g/m²/day, when determined at 23°C and 50 % relative humidity. Water vapor permeation can be adjusted by way of one or more additional coating layers, including for example a polyvinyl alcohol layer.

In another embodiment of the invention, the compostable lid, the compostable natural fiber-based support and/or the food packaging material has a basis weight of from 60 to 200 g/m², preferably of from 90 to 140 g/m², and defines the mass per unit area. Ideally, the thickness is adjusted to be of from 70 to 250 µm, preferably of from 90 to 150 µm, as measured according to ISO 534.

According to further embodiments of the invention, the compostable lid, the compostable natural fiber-based support and/or the food packaging material is further characterized in that it has a wet burst strength measured according to ISO 3689 and a dry burst strength measured according to ISO 2758, and wherein the ratio of the wet burst strength to the dry burst strength is over 40%, preferably greater than 50%.

In some preferred embodiments of the invention, the compostable lid, the compostable natural fiber-based support and/or the food packaging material is further characterized in that the lid is compostable by the EN 13432 standard. In some embodiments, the compostable lid, the compostable natural fiber-based support and/or the food packaging material also meets the more stringent home compostability standards. In yet another preferred embodiment, the compostable lid, the compostable natural fiber-based support and/or the food packaging material is a natural grease barrier, as measured according to TAPPI T454, with a turpetine test penetration of over 1800. Yet further preferably, the compostable lid, the compostable natural fiber-based support and/or the food packaging material meets food contact approval as per the standards BfR 36.1 or FDA 21 CFR § 176-170 & 176-180.

According to another preferred embodiment, the compostable lid comprises heat-sealable fibers, which can advantageously allow for the lid to be sealed onto the beverage capsule or pod or which allow for two lids to be combined together to form a beverage pad. The heat sealable fibers are selected from the group consisting of PLA (polylactic acid), polylactide, PHA (polyhydroxy alkanoate), PHB (poly (hydroxybutyrate)), PHB (V) (poly (hydroxybutyrate-co-hydroxyvalerate)), PBS (poly (butylenesuccinate)), biopolyesters, derivatives (e.g. copolymers) and/or blends or mixtures thereof. For example, the term "PLA" may designate polylactic acid, its derivatives (including L and D type or copolymers) or mixtures thereof.

### Examples

The following working examples are made by parchmentizing in a simultaneous step two or more webs. Parchmentizing is done by treating the webs with a gelatinizing agent under conditions where the reaction time between the gelatinizing agent and the parchmentizable fibers is limited to control dissolution, hydrolysis and degradation. The treated webs are then washed thoroughly so as to remove the gelatinizing agent, after which it is dried to form the composite. The bath chemical partially dissolves or gelatinizes the parchmentizable fibers in the paper sheet. The dissolved parchmentizable fibers are then precipitated as cement or gel when the bath chemical is diluted by washing the treated paper.

To achieve this lamination through parchmentization, each web should contain enough parchmentizable fibers. The gelatinizing agent used in the examples is sulfuric acid and the fiber that is dissolved is cellulosic. The resulting product, after parchmentizing is a composite structure comprised of cellulose fibers, thermo-sealable fibers and a gel. The composite cannot be split into individual layers unlike the prior art coffee lids.

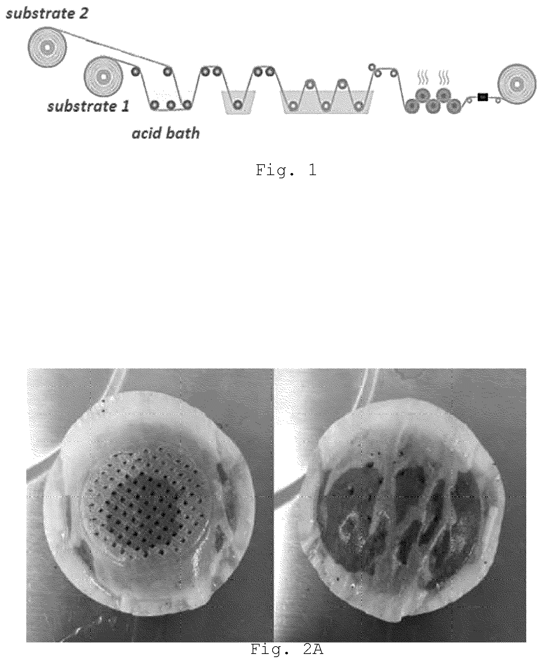

The schematic process shown in Figure 1 shows how two separate layers ((1), (2))/ substrates ((1), (2))/ webs ((1), (2)) are simultaneously parchmentized on an industrial parchmentizer. In this process, the two layers / substrates / webs are first introduced into an acid bath before they are brought into contact with each other and then, subsequently, subjected to a neutralizing, washing and drying step (from left to right in Figure 1).

The working examples have been made in a lab-process, which is described below.

### Example 1:

The first fibrous substrate is a cellulose based wet-laid waterleaf with a Bendtsen porosity of 2000 ml/min. The first fibrous substrate has a basis weight of 60 gsm. This layer is made of 100% bleached cellulosic fibers. In this case, wood fibers from Eucalyptus were used.

The second fibrous substrate is a wet-laid paper (Commercial Grade CD12116F, produced by Ahlstrom-Munksjo) with a basis weight of 16 gsm, containing 30% biodegrabable and thermosealable PLA fibers and 70% cellulosic fibers. The cellulosic fibers are a mixture containing softwood and annual fibers.

The waterleaf is unwounded in an acid bath simultaneously to the wetlaid paper containing PLA fibers and combined together at the outlet of the acid bath by pressing. The obtained laminate is then washed out with water to remove the excess of acid.

The resultant co-parchmentized support contains ∼5wt% PLA fibers, so this product meets both industrial and home compostability standards. The product has an oxygen transmission rate of 0.53 cc/m²/day.

### Example 2:

It is also possible to co-parchmentize more than 2 webs, in order to further improve the oxygen barrier properties. In example 2, three fibrous substrates are co-parchmentized; this creates an additional interface within the material, resulting in a more tortuous/ complex path for oxygen gas through the material (i.e. resulting in lower oxygen transmission rate).

The three fibrous substrates used to create Example 2 are:
- First fibrous substrate: 35 gsm wet-laid waterleaf made of 100% cellulosic fibers
- Second fibrous substrate: 45 gsm wet-laid waterleaf made of 100% cellulosic fibers
- Third fibrous substrate: 16gsm wet-laid paper (Commercial Grade CD12116F, produced by Ahlstrom-Munksjo), comprising 30% PLA fibers and 70% cellulosic fibers

The 2 waterleaves are unwounded in an acid bath simultaneously to the wetlaid paper containing PLA fibers and combined all 3 together at the outlet of the acid bath by pressing. The obtained laminate is then washed out with water to remove the excess of acid

The resultant co-parchmentized support contains < 5wt% PLA fibers, so this product meets both industrial and home compostability standards. The product has an oxygen transmission rate of 1.63 cc/m²/day.

### Comparative Example:

A support, made according to WO 2017/187024, was tested as a comparative example. The support is made of 2 fibrous layers and an adhesive suitable for coming into contact with food is used to join the two layers together. The first layer of the support is an 18gsm spunbond made from PLA fibers. The second layer is vegetable parchment layer produced by Ahlstrom-Munksjo, which has grammage of 70 gsm. Approximately 4gsm of acrylic adhesive is used. The comparative example has a low oxygen transmission rate of 1.4cc/m²/day.

Since acrylic glue was used, the comparative example is not 100% biodegradable unlike the working examples. The working examples are advantageously compostable and also provide oxygen barrier properties, without the need for additional chemicals, without the need for additional chemicals.

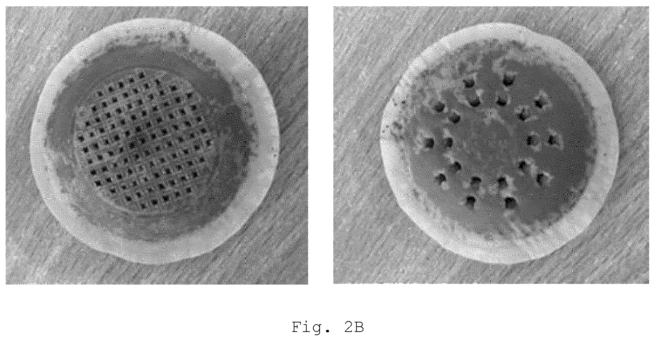

Example 1, Example 2 and the comparative example were used as compostable lids on professional capsules. The capsules were tested for brewing espresso coffee. The comparative example lid delaminated during brewing (as shown in Figure 2A), upon contact with moisture, while Examples 1 and 2 remained intact (see Figure 2B, showing that the co-parchmentized lid of Example 1 did not delaminate upon brewing).

## Claims

1. Compostable lid for sealing a beverage capsule or a beverage pad wherein the lid comprises a natural-fiber based support obtainable by:
(i) providing a first fibrous base sheet comprising natural fiber material sensitive to a gelatinizing agent;
(ii) treating the first base sheet with a gelatinizing agent to give a treated first fibrous base sheet comprising gelatinized material;
(iii) providing a second fibrous base sheet;
(iv) contacting the treated first fibrous base sheet and the second base sheet with each other;
(v) causing at least partial migration of the gelatinized material from the treated first fibrous base sheet into the second fibrous base sheet to give a multilayer product; and
(vi) neutralizing and/or washing the product thus obtained and then drying it.

2. Method for the preparation of a compostable, natural-fiber based support, the method comprising the following steps:
(i) providing a first fibrous base sheet comprising natural fiber material sensitive to a gelatinizing agent;
(ii) treating the first base sheet with a gelatinizing agent to give a treated first fibrous base sheet comprising gelatinized material;
(iii) providing a second fibrous base sheet;
(iv) contacting the treated first fibrous base sheet and the second base sheet with each other;
(v) causing at least partial migration of the gelatinized material from the treated first fibrous base sheet into the second fibrous base sheet to give a multilayer product; and
(vi) neutralizing and/or washing the product thus obtained and then drying it.

3. Compostable natural-fiber based support obtainable according to claim 2.

4. Packaging material comprising the compostable natural-fiber based support according to claim 3.

5. Compostable lid or packaging material according to claim 1 or 4, wherein the natural fiber material comprises at least one of cellulose and chitosan.

6. Compostable lid or packaging material according to any of claims 1, 4 or 5, wherein the gelatinizing agent comprises acid, preferably one or more of sulfuric acid, acetic acid and formic acid.

7. Compostable lid or packaging material according any of claims 1 or 4 to 6, wherein the natural fiber material comprises cellulose fibers that are selected from wood pulp fibers, non-wood vegetable fibers and regenerated cellulose fibers.

8. Compostable lid or packaging material according to any of claims 1 or 4 to 7, wherein step (ii) of treating the first base sheet with a gelatinizing agent is performed by passing the first base sheet through the gelatinizing agent.

9. Compostable lid or packaging material according to any of claims 1 or 4 to 8, wherein the second fibrous base sheet that is provided in step (iii) comprises natural fiber material.

10. Compostable lid or packaging material according to any of claims 1 or 4 to 9, wherein the second fibrous base sheet that is provided in step (iii) is a treated second fibrous base sheet that comprises gelatinized material.

11. Compostable lid or packaging material according to claim 10, wherein the first and the second fibrous base sheets are treated simultaneously in step (ii).

12. Compostable lid or packaging material according to any of claims 9 to 11, wherein step (v) involves at least partial migration of the gelatinized material of the treated second fibrous base sheet into the first fibrous base sheet.

13. Compostable lid or packaging material according to any of claims 1 or 4 to 12, wherein the beverage capsule or pad is a coffee capsule or a coffee pad and/or wherein the packaging material is a food wrapping material.

14. Compostable lid or packaging material according to any of claims 1 or 4 to 13, wherein the lid or packaging material further comprises a coating layer on one or both sides of the natural-fiber based support.

15. Compostable lid or packaging material according to any of claims 1 or 4 to 14, having an oxygen transmission rate of less than 10 cm³/m²/day, preferably less than 2 cm³/m²/day, when determined at 23°C and 50 % relative humidity.

16. Compostable lid or packaging material according to any of claims 1 or 4 to 15, having a water vapor transmission rate of less than 10 g/m²/day, preferably less than 5 g/m²/day, when determined at 23°C and 50 % relative humidity.

17. Coffee capsule or coffee pad comprising the compostable lid according to any of claims 1 or 4 to 16.
